# EUROPÄISCHE PATENTSCHRIFT

(11) **EP 1 144 118 B1**
(45) Veröffentlichungstag und Bekanntmachung des Hinweises auf die Patenterteilung: **05.03.2003**
(21) Anmeldenummer: 99966872.6
(22) Anmeldetag: 15.12.1999
(51) Int. Cl.: B01J 37/34, B01J 37/02, C23C 4/06, C23C 4/04

(54) **VERFAHREN ZUR HERSTELLUNG EINES KATALYSATORKÖRPERS SOWIE KATALYSATORKÖRPER**
METHOD FOR PRODUCING THE BODY OF A CATALYTIC CONVERTER AND BODY OF A CATALYTIC CONVERTER
PROCEDE DE PRODUCTION D'UN CORPS DE POT CATALYTIQUE ET CORPS DE POT CATALYTIQUE CORRESPONDANT

(30) Priorität: 28.12.1998 DE 19860495
(43) Veröffentlichungstag der Anmeldung: 17.10.2001
(73) Patentinhaber: SIEMENS AKTIENGESELLSCHAFT, 80333 München (DE)
(72) Erfinder: HUMS, Erich, D-91093 Hessdorf (DE)
(86) Internationale Anmeldenummer: DE9903996
(87) Internationale Veröffentlichungsnummer: WO00038835

(56) Entgegenhaltungen:
- EP-A- 0 725 159
- EP-A- 0 792 688
- WO-A-96/26006
- WO-A-97/49491
- DE-A- 2 025 430
- DE-A- 2 166 763
- US-A- 5 204 302

## Beschreibung

Die Erfindung bezieht sich auf ein Verfahren zur Herstellung eines Katalysatorkörpers mit einer Aktivmasse auf einem Tragkörper durch thermisches Spritzen, wobei ein Aluminiumhydroxid und metallisches Aluminium getrennt und gleichzeitig thermisch auf den Tragkörper gespritzt werden, und wobei das Aluminiumhydroxid thermisch in ein Aluminiumoxid umgesetzt wird. Die Erfindung bezieht sich weiter auf einen Katalysatorkörper mit einer durch thermisches Spritzen hergestellten Aktivmasse auf einem Tragkörper, wobei die Aktivmasse metallisches Aluminium und Aluminiumoxid umfaßt.

Ein derartiges Verfahren sowie ein derartiger Katalysator sind aus der DE 196 24 923 C1 bekannt. Durch das gleichzeitige thermische Spritzen von Aluminiumhydroxid und metallischem Aluminium werden chemisch verbundene Mikropartikel während des Spritzvorganges und in der sich auf dem Tragkörper abscheidenden Haftmasse gebildet. Diese Umsetzung findet durch den Wärmeeintrag während des thermischen Spritzens statt. Die vollständige Umwandlung in ein Aluminiumoxid kann jedoch auch durch eine nach dem Spritzvorgang stattfindende Wärmebehandlung oder durch einen Kalzinierprozeß erzielt werden. Das gleichzeitig gespritzte Aluminium wirkt als ein Verbundwerkstoff. Das erweichte Aluminium umfließt während des Spritzvorgangs die anderen gespritzten Komponenten und trägt zu deren Haftung aneinander und auf dem Tragkörper bei. Durch das gleichzeitige Spritzen von Aluminiumhydroxid und metallischem Aluminium weist die gebildete Haftmasse auf dem Tragkörper eine hohe spezifische Oberfläche auf und eignet sich daher in besonderem Maße für einen Katalysatorkörper. Die gebildete Haftmasse ist zudem über das Aluminium und über das Aluminiumoxid fest und dauerhaft mit dem Tragkörper verbunden. Aufgrund der hohen spezifischen Oberfläche ist der eigentliche Spritzvorgang relativ kurz, so daß es auch bei dünnen Tragkörpern, d.h. bei einem Tragkörper mit einer Dicke von unter 1 mm, nicht zu einer Verwerfung während des Spritzvorganges kommt.

Als ein Aluminiumhydroxid ist beispielsweise ein Gibbsit (monoklines γ-Al(OH)₃) oder ein Böhmit (rhombisch kristallines Metahydroxid γ-Al(OH)) bekannt. Durch Wasserabscheidung wird daraus ein Aluminiumoxid gebildet.

Unter thermischem Spritzen wird sowohl Plasma- als auch Flammspritzen verstanden. Bei beiden Verfahren werden die gespritzten Komponenten in Pulverform in an sich bekannter Art und Weise einer Spritzdüse zugeführt und durch Erhitzen in mehr oder weniger aufgeschmolzener Form auf den Tragkörper aufgespritzt.

Als Wirkkomponenten zum Bewirken der katalytischen Aktivität der Haftmasse, welche dann als eine Aktivmasse bezeichnet wird, sind aus der DE 196 24 923 C1 Metalloxide, insbesondere Titandioxid, Wolframtrioxid und Molybdäntrioxid, bekannt. Die Metalloxide werden dabei entweder direkt aufgespritzt oder während des Spritzvorganges gebildet.

Nachteiligerweise hat es sich gezeigt, daß sich ein derartiger Katalysatorkörper nicht für Anwendungen in einem Temperaturbereich von oberhalb 400 °C einsetzen läßt. Gerade bei Anwendungen des Katalysatorkörpers zum Abbau von Schadstoffen in einem gasförmigen Medium, wie z.B. in einem Abgas einer Verbrennungsanlage, läßt die Umsetzrate bei Temperaturen oberhalb von 400 °C merklich nach. Der Grund hierfür scheint darin zu liegen, daß die umzusetzenden Schadstoffe bei diesen Temperaturen nicht mehr auf der Aktivmasse adsorbieren können, was jedoch eine Grundvoraussetzung für die katalytische Umsetzung des Schadstoffes ist. Aus diesem Grund ist ein derartiger Katalysatorkörper auch für eine Anwendung als sogenannter DeNOx-Katalysator, welcher gemäß dem Verfahren der Selektiven Katalytischen Reduktion (SCR-Verfahren) Stickoxide in Anwesenheit von Sauerstoff mittels eines geeigneten Reduktionsmittels in Stickstoff umsetzt, oberhalb von 400 °C nicht geeignet. Bei dem SCR-Verfahren kommt hinzu, daß das Reduktionsmittel zur Umsetzung der Stickoxide zusätzlich auf der Aktivmasse adsorbieren muß.

Wegen der geschilderten Nachteile haben sich deshalb Katalysatorkörper auf Zeolith-Basis durchgesetzt, welche jedoch auf herkömmliche Weise durch Herstellen einer Aufschlämmung der Aktivmasse und anschließender Formgebung oder Beschichtung eines Tragkörpers mit einem abschließenden Kalzinierprozeß hergestellt werden müssen. Die Vorteile einer Herstellung durch thermisches Spritzen können bislang nicht genutzt werden.

US-A-5 204 302 offenbart einen Katalysatorkörper mit einer durch thermisches Spritzen (z.B. Plasmaspritzen) hergestellten Aktivmasse auf einem Tragkörper (z.B. Cr- oder Cr-/Al-Stahl). Die Aktivmasse gliedert sich in drei Schichten und umfaßt (i) metallisches Aluminium (in der Adhäsiv- sowie der katalytisch aktiven Schicht (12 bzw. 14)) und (ii) ein Aluminiumoxid (γ- bzw. amorph; in der katalytisch aktiven sowie porösen Schicht (14 bzw. 18)). Zusätzlich (= Möglichkeit 1) kann die Aktivmasse wahlweise (iii) eine "Aluminium/Silizium-Verbindung" (in Schicht (14), gebildet aus Al₂O₃ und wahlweise zugesetztem Stabilisator SiₓO_{y}) sowie wahlweise (iv) eine zusätzliche Wirkkomponente ("activator"), wahlweise in metallischer Form (Platinmetall, bevorzugt Pt)), umfassen. Daneben (= Möglichkeit 2) kann (iii') ein Zeolith ("Aluminium-/Silizium-Verbindung") alternativ zu z.B. Pt als"activator" eingesetzt werden. US-A-5 204 302 offenbart die (wahlweise) Verwendung eines Aluminiumhydroxids lediglich zur Erzeugung der äußeren porösen Schicht (18), ohne jedoch gleichzeitig metallisches Aluminium zu spritzen (Al₂O₃ wird statt dessen getrennt und gleichzeitig gespritzt). Eine Verwendung von Aluminiumhydroxid und/oder einer Aluminium/Silizium-Verbindung in der weiter innenliegenden Schichten (14) statt Al₂O₃ ist ebenso nicht offenbart.

Aufgabe der Erfindung ist es daher, ein Herstellungsverfahren für einen sich auch für Anwendungen im Temperaturbereich von oberhalb 400 °C eignenden Katalysatorkörper durch thermisches Spritzen anzugeben. Ferner ist es Aufgabe der Erfindung, einen Katalysatorkörper mit einer durch thermisches Spritzen hergestellten Aktivmasse anzugeben, welcher sich auch für Anwendungen in einem Temperaturbereich von oberhalb 400 °C eignet.

Zur Lösung der erstgenannten Aufgabe wird ein Verfahren zur Herstellung eines Katalysatorkörpers mit einer Aktivmasse auf einem Tragkörper durch thermisches Spritzen angegeben, wobei ein Aluminiumhydroxid und metallisches Aluminium getrennt und gleichzeitig thermisch auf den Tragkörper gespritzt werden, und wobei das Aluminiumhydroxid thermisch in ein Aluminiumoxid umgesetzt wird. Dabei wird erfindungsgemäß, getrennt von dem metallischen Aluminium, gleichzeitig eine Aluminium/Silizium-Verbindung thermisch auf den Tragkörper gespritzt, und eine metallische Wirkkomponente zugeführt, wobei die Aktivmasse gebildet wird.

Die Erfindung geht dabei von der Erkenntnis aus, daß eine Aluminium/Silizium-Verbindung in Anwesenheit einer metallischen Wirkkomponente bei einer entsprechend hohen spezifischen Oberfläche eine katalytische Aktivmasse darstellt, die sich zur Katalyse einer gewünschten Reaktion auch noch in einem Temperaturbereich von oberhalb 400 °C eignet. Ein Beispiel hierfür sind sogenannte Zeolithe, d.h. kristalline Gerüst-Alumino-Silikate mit charakteristischen Mikroporen, von denen eine besonders hohe Adsorptionsfähigkeit für Schadstoffe, wie z.B. Dioxine/Furane oder Stickoxide, bekannt ist. Durch die Dotierung eines Zeoliths mit einem Metall wird eine hochreaktive Aktivmasse geschaffen. Eine Aluminium/SiliziumVerbindung mit einer entsprechend hohen spezifischen Oberfläche würde diese hohe spezifische Oberfläche jedoch bei einem herkömmlichen thermischen Spritzvorgang aufgrund von Temperaturen von teilweise oberhalb 1000 °C durch zumindest teilweises Aufschmelzen verlieren.

Wird jedoch zu der Aluminium/Silizium-Verbindung gleichzeitig ein Aluminiumhydroxid und getrennt und gleichzeitig metallisches Aluminium thermisch gespritzt, so wird ein Verlust an spezifischer Oberfläche durch Aufschmelzen verhindert. Umfangreiche Untersuchungen haben nämlich ergeben, daß bei einem derartigen Spritzvorgang offensichtlich die Partikel der Aluminium/Silizium-Verbindung zumindest teilweise von Partikeln aus gebildetem Aluminiumoxid und aus metallischem Aluminium umhüllt werden. Möglicherweise bildet sich in Anwesenheit von Sauerstoff auch aus dem metallischen Aluminium ein Aluminiumoxid, welches sich mit dem aus dem Aluminiumhydroxid gebildeten Aluminiumoxid verbindet und die Partikel aus der Aluminium/Silizium-Verbindung damit umklammert. Auch könnten andere chemische Verbindungen oder Adhäsionskräfte für diesen Effekt verantwortlich sein.

Durch die teilweise Umhüllung durch metallisches Aluminium und durch Aluminiumoxid wird die Aluminium/Silizium-Verbindung vor Temperatureinwirkung geschützt. Da sich zudem bei einem derartigen Spritzvorgang eine auf dem Tragkörper gut haftende Masse mit einer hohen spezifischen Oberfläche bildet, ist auch die Dauer des Spritzvorgangs relativ kurz. Die geschützte Aluminium/Silizium-Verbindung wird demnach beim thermischen Spritzen im wesentlichen nicht aufgeschmolzen und verliert infolgedessen ihre spezifische Oberfläche nur in vernachlässigbarem Umfang.

Schließlich wird eine Aktivmasse dadurch erzielt, daß eine metallische Wirkkomponente zugeführt wird. Dies kann vorteilhaft dadurch geschehen, daß die Aluminium/Silizium-Verbindung vor dem thermischen Spritzen mit der metallischen Wirkkomponente dotiert wird. Dies kann in an sich bekannter Art und Weise geschehen. Auch kann die metallische Wirkkomponente bereits bei der Synthese der Aluminium/Silizium-Verbindung bereitgestellt werden. Die letztgenannte Vorgehensweise empfiehlt sich insbesondere dann, wenn die verwendete Aluminium/silizium-Verbindung einen vergleichsweise geringen Porendurchmesser aufweist.

Der thermische Spritzvorgang kann in einer Sauerstoff enthaltenden Atmosphäre oder in Luft stattfinden. Dies begünstigt zum einen die Umsetzung des Aluminiumhydroxids in ein Aluminiumoxid und fördert zum anderen auch die teilweise Umsetzung von Aluminium in Aluminiumoxid. Dies erhöht prinzipiell die Vernetzung der auf dem Trägerkörper aufgebrachten Masse.

Das metallische Aluminium kann auch eine Legierung aus Aluminium sein.

Bevorzugt kann die metallische Wirkkomponente auch dadurch zugeführt werden, daß die auf dem Tragkörper aufgebrachte Masse mit der metallischen Wirkkomponente imprägniert wird. Dies kann z.B. durch Eintauchen des Katalysatorkörpers in eine Lösung der metallischen Wirkkomponente, durch anschließendes Trocknen und Kalzinieren geschehen. Die metallischen Wirkkomponenten können dabei in Form ihrer Nitrate gelöst vorliegen.

Als metallische Wirkkomponente mit Erzeugung einer hohen katalytischen Aktivität in einer Aluminium/Silizium-Verbindung eignet sich ein Edelmetall. Eine besonders gute katalytische Aktivität läßt sich durch Platin (Pt), durch Palladium (Pd), durch Rhodium (Rh) oder durch eine Mischung der genannten Metalle erzielen.

In einer vorteilhaften Ausgestaltung der Erfindung wird das Aluminiumhydroxid und die Aluminium/Silizium-Verbindung vor dem Spritzvorgang zu einer Pulvermischung verarbeitet und gemeinsam thermisch auf den Tragkörper gespritzt. Auf diese Weise wird sicher erreicht, daß bereits während des Spritzvorganges chemische Verbindungen zwischen dem Aluminiumhydroxid (welches teilweise und allmählich in ein Aluminiumoxid umgesetzt wird) und der Aluminium/Silizium-Verbindung geknüpft werden. Auf diese Weise kann die Aluminium/SiliziumVerbindung in einem noch höheren Maße vor Temperatureinwirkung während des thermischen Spritzens geschützt werden.

Insbesondere dann, wenn das zu spritzende Pulver der Aluminium/Silizium-Verbindung sehr fein bzw. staubförmig ist, und es deshalb zu einer Verstopfung der verwendeten Düse kommt, empfiehlt es sich, die Aluminium/Silizium-Verbindung und das Aluminiumhydroxid derart zu einer Pulvermischung zu verarbeiten, daß Partikel der Aluminium/Silizium-Verbindung mit Partikeln des Aluminiumhydroxids agglomeriert sind. Durch diese Agglomeration oder durch die Benetzung der Aluminium/Silizium-Verbindung mit dem Aluminiumhydroxid wird eine rieselfähige Pulvermischung geschaffen, welche sich leicht thermisch verspritzen läßt. Auch hierdurch wird wieder erzielt, daß chemische Verbindungen bereits während des Spritzvorgangs geknüpft werden.

Die Benetzung kann beispielsweise durch Tröpfeln eines gelösten Aluminiumhydroxids auf die in Pulverform vorliegende Aluminium/Silizium-Verbindung unter ständigem Durchmischen geschehen.

Vorteilhafterweise wird der Katalysatorkörper einer Wärmebehandlung unterzogen. Zum einen kann dadurch eine vollständige Umsetzung des Aluminiumhydroxids in das Aluminiumoxid durch Wasserentzug erfolgen, wodurch zusätzlich verhärtet wird. Zum anderen läßt sich dann, wenn die Aktivmasse der Wärmebehandlung unterzogen wird, die katalytische Aktivität erhöhen. Insgesamt wird auch die Haftung der Aktivmasse an den Tragkörper verbessert. Bei der Wärmebehandlung kann es sich auch um einen Kalzinierprozeß handeln.

Zweckmäßigerweise wird eine Aluminium/Silizium-Verbindung mit einem atomar gemessenen höheren Anteil an Silizium als ein Aluminium thermisch gespritzt. Eine derartige Aluminium/Silizium-Verbindung zeichnet sich aufgrund ihres hohen Silizium-Anteils durch eine sehr gute Temperaturbeständigkeit aus. Die Verwendung einer solchen Aluminium/Silizium-Verbindung hat den Vorteil, daß sich zum einen die spezifische Oberfläche während des Spritzvorganges nicht verringert. Zum anderen hat dies den Vorteil, daß eine derartige Aluminium/Silizium-Verbindung in der Aktivmasse auch bei einem längeren Einsatz des Katalysatorkörpers in einem Temperaturbereich von oberhalb 400 °C ihre Materialeigenschaften nicht verändert. Es empfiehlt sich insbesondere eine solche Aluminium/Silizium-Verbindung zu wählen, welche bis zu Temperaturen von 700 °C dauerbelastungsstabil, d.h. thermisch stabil ohne eine Strukturveränderung hinsichtlich der spezifischen Oberfläche und des Porenvolumens, ist.

Bevorzugterweise wird als Aluminium/Silizium-Verbindung ein Aluminosilikat thermisch gespritzt. Von diesen Aluminosilikaten ist ihre katalytische Eignung und relativ gute Temperaturbeständigkeit bekannt. Insbesondere eignet sich als ein Aluminosilikat ein Zeolith, d.h. ein Gerüst Aluminosilikat, welches aufgrund seiner definierten Gitterstruktur charakteristische Mikroporen in der Großenordnung von Gasmolekülen aufweist. Dabei haben Zeolithe insbesondere eine hohe spezifische Oberfläche zwischen 800 und 1000 m²/g und weisen eine hohe Adsorptionsfähigkeit für Gasmoleküle auf. Zur Definition von Zeolithen sei im übrigen auf Römpps Chemie-Lexikon, Franckh'sche Verlagshandlung, Stuttgart 1988, 8. Auflage, Seiten 4690 bis 4691, und auf Kirk-Othmer, "Encyclopedia of Chemical Technology", 3. Auflage, Band 15, John Wiley & Sons, New York, 1981, Seiten 640 bis 669, verwiesen. Als Zeolithe wiederum besonders geeignet sind insbesondere der natürlich vorkommende Mordenit, ein ZSM-5-, ein H-, ein USY- oder ein Beta-Zeolith. Zur Definition sei dabei auf den Fachaufsatz "Acidität der Lewis-Zentren in Zeolith-Katalysatoren - NO als Sondenmolekül" von Frank O. Witzel in Fortschrittberichte VDI, Reihe 3: Verfahrenstechnik, Nr. 292, verwiesen. Gerade bei einer Dotierung mit Platin, Palladium oder Rhodium weist ein derartiger Zeolith, insbesondere ein saurer Zeolith, eine hohe katalytische Aktivität zur Umsetzung von Stickoxiden aus einem gasförmigen Medium gemäß dem SCR-Verfahren auf. Ein unter Verwendung eines derartigen Zeolithen hergestellter Katalysatorkörper eignet sich daher insbesondere als ein Hochtemperatur-DeNOx-Katalysator zur Minderung von Stickoxiden im Abgas einer Verbrennungsanlage. Eine solche Anwendung ist beispielsweise die Anwendung zur Stickoxidreduzierung im Abgas einer Gasturbine, welches leicht hohe Temperaturen bis über 450 °C aufweist. Auf eine Kühlung des Abgases durch einen Abhitzedampferzeuger kann verzichtet werden.

Ebenfalls eine hohe katalytische Aktivität weist ein Kupfer-Siliziumaluminophosphat auf.

Zur Lösung der zweitgenannten Aufgabe wird ein Katalysatorkörper mit einer durch thermisches Spritzen hergestellten Aktivmasse auf einem Tragkörper angegeben, wobei die Aktivmasse metallisches Aluminium, ein Aluminiumoxid und zusätzlich erfindungsgemäß eine Aluminium/Silizium-Verbindung und eine metallische Wirkkomponente umfaßt, und wobei die Aktivmasse durch getrennt voneinander und gleichzeitig vorgenommenes thermisches Spritzen des metallischen Aluminiums und der Aluminium/Silizium-Verbindung erhältlich ist.

Ein derartiger Katalysatorkörper eignet sich insbesondere für jedwede Anwendungen in einem Temperaturbereich oberhalb 400 °C. Aufgrund seiner hohen Temperaturbeständigkeit sind keine Einbußen hinsichtlich seiner katalytischen Aktivität auch über eine längere Standzeit hinweg zu erwarten.

Insbesondere für Anwendungen zum Abbau von Schadstoffen in einem gasförmigen Medium kann der Katalysatorkörper in Form eines durchströmbaren Plattenkatalysators ausgebildet sein. Natürlich sind auch jedwede andere Ausführungsformen vorstellbar. Der Katalysatorkörper kann je nach Art der metallischen Wirkkomponente und Art der Aluminium/Silizium-Verbindung zum Abbau verschiedenster Schadstoffe, wie z.B. Dioxine/Furane, Stickoxide oder Kohlenmonoxid, eingesetzt werden.

Weitere vorteilhafte Ausgestaltungen sind in den Unteransprüchen ausgeführt. Dabei zeigt der Katalysatorkörper eine besonders hohe katalytische Aktivität hinsichtlich des Abbaus von Stickoxiden gemäß dem SCR-Verfahren, wenn als metallische Wirkkomponente ein Edelmetall, insbesondere Platin Pt, Palladium Pd, Rhodium Rh oder eine Mischung hiervon, verwendet ist.

Aufgrund der hohen spezifischen Oberfläche und der hohen Adsorptionsfähigkeit der Gasmoleküle ist es für den Einsatz des Katalysatorkörpers in gasförmigen Medien von Vorteil, wenn die Aluminium/Silizium-Verbindung ein Aluminosilikat, insbesondere ein Zeolith ist.

Besonders günstig für den Katalysatorkörper ist es, wenn der Tragkörper eine Dicke von weniger als 1 mm, vorzugsweise von weniger als 100 µm, aufweist. Auf diese Weise kann Material für den Tragkörper gegenüber einem herkömmlichen Katalysator eingespart werden.

Der Tragkörper selbst kann aus einem Metall oder aus einer Keramik bestehen. Der Tragkörper kann dabei eine beliebige Struktur, z.B. in Form einer Platte, eines Bandes, einer Stange oder eines Rohres haben. Der Tragkörper kann auch wabenförmig ausgebildet sein. Besonders vorteilhaft als Material für den Tragkörper ist ein Chrom-Aluminium-Stahl. Mit einem derartigen Tragkörper läßt sich eine hohe Standdauer des Katalysatorkörpers erzielen.

Für eine bessere Haftung der Haftmasse oder der Aktivmasse auf dem Tragkörper kann der Tragkörper mechanisch oder chemisch aufgerauht sein.

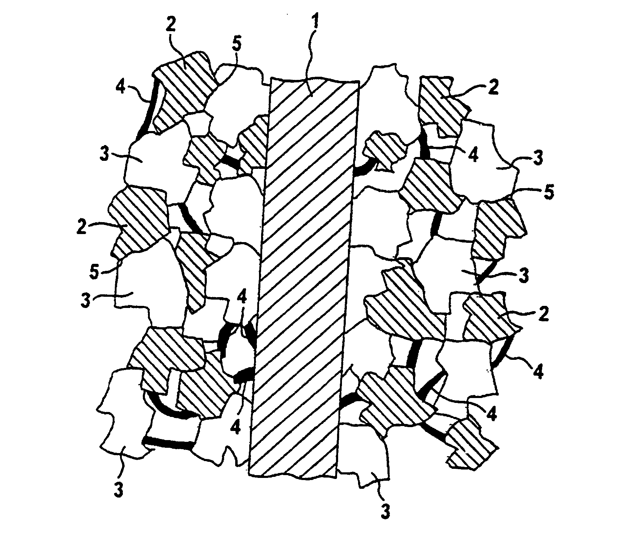

Ein Ausführungsbeispiel der Erfindung wird anhand einer Figur näher erläutert. Dabei zeigt die Figur:

Einen Querschnitt durch einen durch thermisches Spritzen hergestellten hochtemperaturstabilen Katalysatorkörper.

Zur Herstellung des in der Figur dargestellten Katalysatorkörpers wird ein Pulver von Aluminium und eine Pulvermischung aus Böhmit, Gibbsit und einem sauren ZSM-5-Zeolithen mit einem Verhältnis von Silizium zu Aluminiumoxid von 23,3 verwendet. Das Aluminiumpulver hat eine mittlere Teilchengröße von weniger als 30 µm. Zur Herstellung der Pulvermischung aus Böhmit, Gibbsit und dem ZSM-5-Zeolithen wird das feinkörnige Pulver des ZSM-5-Zeolithen mit der Böhmit- und Gibbsit-Komponente benetzt. Auf diese Weise wird ein rieselförmiges Pulver der Pulvermischung erhalten. Der prozentuale Massenanteil des Aluminiums betrug 8 %, des Böhmits 26 %, des Gibbsits 16,5 % und des dotierten ZSM-5-Zeolithen 49,5 %. Der ZSM-5-Zeolith wird mit der metallischen Wirkkomponente Platin dotiert.

Das metallische Aluminium wird gleichzeitig und getrennt zu der Pulvermischung aus Böhmit, Gibbsit und dem ZSM-5-Zeclithen thermisch gespritzt. Die aufgespritzte Masse wird einem abschließenden Kalzinierungsvorgang unterzogen, um eine endgültige Entwässerung und eine Aktivierung zu der Aktivmasse zu erzielen. Die Aktivmasse zeigt eine BET-Oberfläche von 60 bis 70 m²/g.

Der Tragkörper 1 des Katalysatorkörpers ist ein Chrom-Aluminium-Stahl in Form einer Platte mit einer Dicke von 40 µm. Der Tragkörper 1 ist beidseitig mit der Aktivmasse durch thermisches Spritzen beschichtet. Die Oberfläche des Tragkörpers 1 ist in der Figur nicht näher ausgestaltet, sie kann jedoch, z.B. durch eine mechanische oder chemische Behandlung, aufgerauht sein. Durch die Verformung beim Aufprall haftet das Aluminiumoxid 3 durch Adhäsionskräfte auf dem Tragkörper 1. Das getrennt gespritzte, metallische Aluminium 4 wirkt als ein Verbundwerkstoff und verknüpft die einzelnen katalytisch aktiven Komponenten sowohl untereinander als auch die Aktivmasse mit dem Tragkörper 1. Man erkennt deutlich die Mikropartikel aus dem Aluminiumoxid 3 und dem ZSM-5-Zeolithen 2. Die Mikropartikel des ZSM-5-Zeolithen 2 sind durch die Mikropartikel des Aluminiumoxids 3 umgeben und mit diesen sowohl direkt als auch über das Aluminium 4 chemisch verbunden. Die Umklammerung der Mikropartikel des ZSM-5-Zeolithen durch Aluminium 4 und durch Partikel aus Aluminiumoxid 3 während des Spritzvorganas ist infolge des Aufpralls auf den Tragkörper 1 nicht mehr so deutlich zu erkennen. Die Stellen der chemischen Bindung des Aluminiumoxids 3 mit dem ZSM-5-Zeolithen 2, sind mit den Bezugszeichen 5 gekennzeichnet.

Aufgrund der chemischen Bindungen zwischen dem Aluminiumoxid 3 und dem ZSM-5-Zeolithen 2 und aufgrund dem als Verbundwerkstoff wirkenden Aluminium 3 weist die Aktivmasse des Katalysatorkörpers eine hohe Abriebfestigkeit auf.

Der ZSM-5-Zeolith ist derart mit der metallischen Wirkkomponente Platin dotiert, daß diese in die Mikroporen des ZSM-5-Zeolithen eingelagert ist. Die metallische Wirkkomponente Platin ist in der Figur nicht näher dargestellt.

Der dargestellte Katalysatorkörper eignet sich zum Abbau von Stickoxiden gemäß dem SCR-Verfahren in einem gasförmigen Medium. Der Katalysatorkörper zeichnet sich durch eine hohe Temperaturbeständigkeit aus und eignet sich daher insbesondere für Anwendungen in einem Temperaturbereich von oberhalb 400 °C. Er ist daher z.B. prädestiniert für die Anwendung als ein DeNOx-Katalysator in einem heißen Abgas einer Verbrennungsanlage. Eine diesbezügliche Verbrennungsanlage ist beispielsweise eine Gasturbine. Eine Abkühlung des heißen Abgases zum Einsatz üblicher DeNOx-Katalysatoren ist nicht mehr erforderlich.

## Patentansprüche

1. Verfahren zur Herstellung eines Katalysatorkörpers mit einer Aktivmasse auf einem Tragkörper (1) durch thermisches Spritzen, wobei ein Aluminiumhydroxid und ein metallisches Aluminium (4) getrennt voneinander gleichzeitig thermisch auf den Tragkörper (1) gespritzt werden, und wobei das Aluminiumhydroxid thermisch in ein Aluminiumoxid (3) umgesetzt wird,
**dadurch gekennzeichnet, daß** getrennt von dem metallischen Aluminium (4) gleichzeitig eine Aluminium/Silizium-Verbindung thermisch auf den Tragkörper (1) gespritzt wird, und daß eine metallische Wirkkomponente zugeführt wird.

2. Verfahren nach Anspruch 1,
**dadurch gekennzeichnet, daß** die metallische Wirkkomponente dadurch zugeführt wird, daß die Aluminium/Silizium-Verbindung vor dem thermischen Spritzen mit der metallischen Wirkkomponente dotiert wird.

3. Verfahren nach Anspruch 1,
**dadurch gekennzeichnet, daß** die metallische Wirkkomponente durch Imprägnieren zugeführt wird.

4. Verfahren nach einem der vorhergehenden Ansprüche 2 oder 3,
**dadurch gekennzeichnet, daß** als metallische Wirkkomponente ein Edelmetall, insbesondere Pt, Pd, Rh oder eine Mischung hiervon, verwendet wird.

5. Verfahren nach einem der vorhergehenden Ansprüche,
**dadurch gekennzeichnet, daß** das Aluminiumhydroxid und die Aluminium/Silizium-Verbindung zu einer Pulvermischung verarbeitet und gemeinsam thermisch auf den Tragkörper gespritzt werden.

6. Verfahren nach Anspruch 5,
**dadurch gekennzeichnet, daß** die Aluminium/Silizium-Verbindung und das Aluminiumhydroxid derart zu der Pulvermischung verarbeitet werden, daß Partikel der Aluminium/Silizium-Verbindung mit Partikeln des Aluminiumhydroxids agglomeriert sind.

7. verfahren nach einem der vorhergehenden Ansprüche,
**dadurch gekennzeichnet, daß** nach dem thermischen Spritzen eine Wärmebehandlung vorgenommen wird.

8. Verfahren nach einem der vorhergehenden Ansprüche,
**dadurch gekennzeichnet, daß** eine Aluminium/Silizium-Verbindung mit einem atomar gemessenen höheren Anteil an Silizium als an Aluminium thermisch gespritzt wird.

9. Verfahren nach einem der vorhergehenden Ansprüche,
**dadurch gekennzeichnet, daß** als Aluminum/Silizium-Verbindung ein Aluminosilikat thermisch gespritzt wird.

10. Verfahren nach Anspruch 9,
**dadurch gekennzeichnet, daß** als Aluminosilikat ein Zeolith, insbesondere ein Mordenit, ein ZSM-5-(2), ein H-, ein USY- oder ein Beta-Zeolith, thermisch gespritzt wird.

11. Verfahren nach einem der Ansprüche 1 bis 8,
**dadurch gekennzeichnet, daß** als Aluminium/Silizium-Verbindung ein Kupfer-Siliziumaluminophosphat thermisch gespritzt wird.

12. Katalysatorkörper mit einer durch thermisches Spritzen hergestellten Aktivmasse auf einem Tragkörper (1),
**dadurch gekennzeichnet, daß** die Aktivmasse metallisches Aluminium (4), ein Aluminiumoxid (3), eine Aluminium/Silizium-Verbindung und eine metallische Wirkkomponente umfaßt, wobei die Aktivmasse durch getrennt voneinander und gleichzeitig vorgenommenes thermisches Spritzen des metallischen Aluminiums und der Aluminiumi/Siliziumverbindung erhältlich ist.

13. Katalysator nach Anspruch 12,
**dadurch gekennzeichnet, daß** das Aluminiumoxid (3) und die Aluminium/Silizium-Verbindung im wesentlichen jeweils in Form von separaten Mikropartikeln vorliegen, und daß die Mikropartikel über das metallische Aluminium (4) miteinander vernetzt sind.

14. Katalysator nach Anspruch 13,
**dadurch gekennzeichnet, daß** die Mikropartikel zusätzlich über eine Sauerstoffbindung miteinander verbunden sind.

15. Katalysator nach einem der Ansprüche 12 bis 14,
**dadurch gekennzeichnet, daß** die metallische Wirkkomponente in die Aluminium/Silizium-Verbindung eingelagert ist.

16. Katalysator nach einem der Ansprüche 12 bis 15,
**dadurch gekennzeichnet, daß** die metallische Wirkkomponente ein Edelmetall, insbesondere Pt, Pd, Rh oder eine Mischung hiervon, ist.

17. Katalysator nach einem der Ansprüche 12 bis 16,
**dadurch gekennzeichnet, daß** die Aluminium/Silizium-Verbindung ein Aluminosilikat ist.

18. Katalysator nach Anspruch 17,
**dadurch gekennzeichnet, daß** das Aluminosilikat ein Zeolith, insbesondere ein Mordenit, ein ZSM-5-(2), ein H-, ein USY- oder ein Beta-Zeolith ist.

19. Katalysator nach einem der Ansprüche 12 bis 18,
**dadurch gekennzeichnet, daß** die Aluminium/Siliziuin-Verbindung ein Kupfer-Siliziumaluminophosphat ist.

## Claims

1. Process for producing a catalyst body with an active compound on a support body (1) by thermal spraying, an aluminium hydroxide and a metallic aluminium (4) being thermally sprayed separately but simultaneously onto the support body (1), and the aluminium hydroxide being thermally converted into an aluminium oxide (3), **characterized in that** an aluminium/silicon compound is thermally sprayed, separately from but at the same time as the metallic aluminium (4), onto the support body (1), and **in that** a metallic active component is supplied.

2. Process according to Claim 1, **characterized in that** the metallic active component is supplied by doping the aluminium/silicon compound with the metallic active component prior to the thermal spraying.

3. Process according to Claim 1, **characterized in that** the metallic active component is supplied by impregnation.

4. Process according to either of the preceding Claims 2 and 3, **characterized in that** a precious metal, in particular Pt, Pd, Rh or a mixture thereof, is used as the metallic active component.

5. Process according to one of the preceding claims, **characterized in that** the aluminium hydroxide and the aluminium/silicon compound are processed to form a powder mixture and together are thermally sprayed onto the support body.

6. Process according to Claim 5, **characterized in that** the aluminium/silicon compound and the aluminium hydroxide are processed to form the powder mixture in such a manner that particles of the aluminium/silicon compound are agglomerated with particles of the aluminium hydroxide.

7. Process according to one of the preceding claims, **characterized in that** a heat treatment is carried out after the thermal spraying.

8. Process according to one of the preceding claims, **characterized in that** an aluminium/silicon compound with a higher atomic percentage of silicon than of aluminium is thermally sprayed.

9. Process according to one of the preceding claims, **characterized in that** an aluminosilicate is thermally sprayed as the aluminium/silicon compound.

10. Process according to Claim 9, **characterized in that** a zeolite, in particular a mordenite, a ZSM-5 zeolite (2), an H-zeolite, a USY-zeolite or a beta zeolite, is thermally sprayed as the aluminosilicate.

11. Process according to one of Claims 1 to 8, **characterized in that** a copper/silicon aluminophosphate is thermally sprayed as the aluminium/silicon compound.

12. Catalyst body with an active compound, which is produced by thermal spraying, on a support body (1), **characterized in that** the active compound comprises metallic aluminium (4), an aluminium oxide (3), an aluminium/silicon compound and a metallic active component, the active compound being obtainable by thermal spraying of the metallic aluminium and of the aluminium/silicon compound which is carried out seperately and simultaneously.

13. Catalyst according to Claim 12, **characterized in that** the aluminium oxide (3) and the aluminium/silicon compound are in each case substantially in the form of separate microparticles, and **in that** the microparticles are crosslinked to one another by means of the metallic aluminium (4).

14. Catalyst according to Claim 13, **characterized in that** the microparticles are additionally joined to one another by means of oxygen binding.

15. Catalyst according to one of Claims 12 to 14, **characterized in that** the metallic active component is incorporated in the aluminium/silicon compound.

16. Catalyst according to one of Claims 12 to 15, **characterized in that** the metallic active component is a precious metal, in particular Pt, Pd, Rh or a mixture thereof.

17. Catalyst according to one of Claims 12 to 16, **characterized in that** the aluminium/silicon compound is an aluminosilicate.

18. Catalyst according to Claim 17, **characterized in that** the aluminosilicate is a zeolite, in particular a mordenite, a ZSM-5 zeolite (2), an H-zeolite, a USY-zeolite or a beta zeolite.

19. Catalyst according to one of Claims 12 to 18, **characterized in that** the aluminium/silicon compound is a copper/silicon aluminophosphate.

## Revendications

1. Procédé de production d'un corps de pot catalytique comprenant une masse active sur un corps (1) servant de support par métallisation à chaud, en projetant à chaud simultanément sur le corps (1) servant de support, mais séparément l'un de l'autre, de l'hydroxyde d'aluminium et un aluminium (4) métallique, l'hydroxyde d'aluminium étant transformé à chaud en un oxyde (3) d'aluminium, **caractérisé en ce que** l'on projette à chaud sur le corps (1) servant de support, séparément de l'aluminium (4) métallique, en même temps, un composé d'aluminium/silicium et **en ce que** l'on apporte un activateur métallique.

2. Procédé suivant la revendication 1,
**caractérisé en ce que** l'on apporte l'activateur métallique en dopant le composé d'aluminium/silicium avant la métallisation à chaud par 1' activateur métallique.

3. Procédé suivant la revendication 1,
**caractérisé en ce que** l'on apporte l'activateur métallique par imprégnation.

4. Procédé suivant l'une des revendications précédentes 2 ou 3,
**caractérisé en ce que** l'on utilise comme activateur métallique un métal précieux, notamment Pt, Pd, Rh ou l'un de leurs mélanges.

5. Procédé suivant l'une des revendications précédentes,
**caractérisé en ce que** l'on met l'hydroxyde d'aluminium et/ou le composé d'aluminium/silicium en un mélange de poudre et on les projette en commun à chaud sur le corps servant de support.

6. Procédé suivant la revendication 5,
**caractérisé en ce que** l'on met le composé d'aluminium/silicium et l'hydroxyde d'aluminium en le mélange de poudre de façon à ce que des particules du composé d'aluminium/silicium soient agglomérées à des particules de l'hydroxyde d'aluminium.

7. Procédé suivant l'une des revendications précédentes,
**caractérisé en ce que** l'on effectue un traitement thermique après la métallisation à chaud.

8. Procédé suivant l'une des revendications précédentes,
**caractérisé en ce que** l'on métallise à chaud un composé d'aluminium/silicium ayant une proportion en atome plus grande de silicium que d'aluminium.

9. Procédé suivant l'une des revendications précédentes,
**caractérisé en ce que** l'on métallise à chaud comme composé d'aluminium/silicium un aluminosilicate.

10. Procédé suivant la revendication 9,
**caractérisé en ce que** l'on métallise à chaud comme aluminosilicate une zéolithe, notamment une mordénite, un zéolithe ZSM-5 (2), une zéolithe H, une zéolithe USY ou une zéolithe beta.

11. Procédé suivant l'une des revendications 1 à 8,
**caractérisé en ce que** l'on métallise à chaud comme composé d'aluminium/silicium un aluminophosphate de cuivre-silicium.

12. Corps de pot catalytique ayant sur un corps (1) servant de support une masse active produite par métallisation à chaud,
**caractérisé en ce que** la masse active comprend de l'aluminium (4) métallique, un oxyde d'aluminium (3), un composé d'aluminium/silicium et un activateur métallique, la masse active pouvant être obtenue par métallisation thermique effectuée séparément l'un de l'autre et simultanément de l'aluminium métallique et du composé d'aluminium/silicium.

13. Pot catalytique suivant la revendication 12,
**caractérisé en ce que** l'oxyde d'aluminium (3) et le composé d'aluminium/silicium sont présents essentiellement respectivement sous la forme de particules microscopiques distinctes et **en ce que** les particules microscopiques sont réticulées les unes aux autres par l'aluminium (4) métallique.

14. Pot catalytique suivant la revendication 13,
**caractérisé en ce que** les particules microscopiques sont reliées entre elles en outre par une liaison oxygène.

15. Pot catalytique suivant l'une des revendications 12 à 14,
**caractérisé en ce que** l'activateur métallique est incorporé au composé d'aluminium/silicium.

16. Pot catalytique suivant l'une des revendications 12 à 15,
**caractérisé en ce que** l'activateur métallique est un métal précieux, notamment Pt, Pd, Rh ou l'un de leurs mélanges.

17. Pot catalytique suivant l'une des revendications 12 à 16,
**caractérisé en ce que** le composé d'aluminium/silicium est un aluminosilicate.

18. Pot catalytique suivant la revendication 17,
**caractérisé en ce que** l'aluminophosphate est un zéolithe, notamment une mordénite, un zéolithe ZSM-5 (2), une zéolithe H, une zéolithe USY- ou une zéolithe beta.

19. Pot catalytique suivant l'une des revendications 12 à 18,
**caractérisé en ce que** le composé d'aluminium/silicium est un aluminophosphate de cuivre et de silicium.
